# DEMANDE DE BREVET EUROPEEN

(11) **EP 2 484 248 A1**
(43) Date de publication de la demande: **08.08.2012**
(21) Numéro de dépôt: 11194562.2
(22) Date de dépôt: 20.12.2011
(51) Int. Cl.: A45C 3/06, H04B 1/38, A45C 11/00, A45C 13/00, A45C 3/00, A45F 5/00, G06F 1/16

(54) **Housse pour un appareil électronique portable**

(30) Priorité: 04.02.2011 FR 1150926
(71) Demandeur: Millet, 74940 Annecy le Vieux (FR)
(72) Inventeur: Martial, Hélène, 74570 Thorens-Glières (FR)
(74) Mandataire: Maureau, Philippe

(57) **Abrégé**

L'invention concerne une housse (1) pour un appareil électronique portable, comportant:
- un réceptable (4), destiné à recevoir l'appareil électronique, formé:
● d'une paroi inférieure (8),
● d'au moins trois parois latérales (10, 12, 14, 16), délimitant une ouverture (18) par laquelle l'appareil peut être introduit et retiré du réceptacle (4), et
● de moyens de maintien de l'appareil dans le réceptacle,

- un rabat (6) mécaniquement raccordé à une des parois (14) du réceptacle (4),

caractérisé en ce que,
- le réceptacle (4) et la rabat (6) sont réalisés dans un matériau textile formant une enveloppe au sein de laquelle est logé un garnissage calorifuge, et- le rabat (6) comporte un élastique (32) pour son maintien sur le réceptacle (4) lorsque le rabat (6) est dans sa position de fermeture.

## Description

L'invention concerne une housse pour un appareil électronique portable.

Dans cette description, on désigne plus particulièrement par « appareil électronique portable » un appareil électronique autonome en énergie électrique. A cet effet, un appareil électronique portable est typiquement équipé d'une batterie. Un appareil électronique portable est, par exemple, un téléphone portable, une tablette numérique, un PDA (pour Personal Digital Assistant), un GPS (pour Global Positioning System), un ordinateur portable, ou encore un APN (Access Point Name).

L'état de la technique est constitué par les documents US2004203486 et CH345983. Le document US2004203486 concerne une housse pour téléphone portable. Le document CH345983 concerne un écrin.

Lors de leur manipulation, il arrive que les appareils électroniques portables soit sujet à des agressions mécaniques (rayures, chutes, etc... ). Or, ces appareils sont fragiles. Aussi, une chute même de faible hauteur peut entraîner la rupture de l'appareil.

Des housses de protection pour un appareil électronique portable ont déjà été proposées. Les housses connues, réalisées généralement à partir d'une nappe de cuir ou de matière synthétique, offrent une protection acceptable contre les rayures ou les chocs de faible intensité. Toutefois, celles-ci offrent une protection insuffisante lorsque l'appareil chute de la poche d'un utilisateur par exemple.

L'invention vise en conséquence à fournir une housse pour un appareil électronique portable formant une excellente protection contre les chutes.

Par ailleurs, pour des raisons de sécurité, il est généralement conseillé aux personnes pratiquant des activités en montagne (ski, randonnée, alpinisme, etc... ) de s'équiper d'appareils électroniques portables tels que ceux cités plus haut. Or, un inconvénient des appareils électroniques portables est que lorsqu'ils sont placés dans un environnement froid, la décharge de leur batterie ou pile tend à s'accélèrer. Dans ces conditions, l'autonomie de ces appareils chute inexorablement.

En conséquence, l'invention vise par ailleurs à fournir une housse permettant de limiter la décharge d'un appareil électronique due à son utilisation dans un environnement froid.

L'invention a pour objet une housse pour un appareil électronique portable, comportant:
- un réceptable, destiné à recevoir l'appareil électronique, qui est formé :
   **●** d'une paroi inférieure,
   ● d'au moins trois parois latérales, délimitant une ouverture par laquelle l'appareil peut être introduit et retiré du réceptacle, et
   ● de moyens de maintien de l'appareil dans le réceptacle,
- un rabat mécaniquement raccordé à une des parois du réceptacle, deplaçable entre:
   ● une première position dans laquelle le rabat recouvre l'ouverture du réceptacle, et
   ● une seconde position dans laquelle le rabat ne recouvre pas cette ouverture,
caractérisé en ce que,
- le réceptacle (4) et la rabat (6) sont réalisés dans un matériau textile formant une enveloppe au sein de laquelle est logé un garnissage calorifuge, et
- le rabat comporte un élastique pour son maintien sur le réceptacle lorsque le rabat est dans sa première position.

La housse de l'invention est avantageuse en ce qu'elle forme une enceinte close à l'intérieur duquel est logé l'appareil électronique. Lors de son fonctionnement l'appareil dégage de la chaleur dans cette enceinte. La présence du garnissage calorifuge dans les parois de la housse permet de limiter la perte de chaleur de l'intérieur de la housse vers l'extérieur de la housse. Dans ces conditions, l'appareil est placé en permanence dans un environnement à une température supérieure à la température extérieure. Ainsi, lorsque l'appareil et la housse sont placés dans un environnement froid, la décharge de la batterie de l'appareil est ralentie, et par la même l'autonomie de cet appareil est allongée.

Par ailleurs, le garnissage forme un rembourage dans les parois de la housse permettant à la housse d'offrir une excellente protection contre d'éventuels chocs.

Les modes de réalisation de cette invention peuvent comporter les caractéristiques suivantes.

Le garnissage calorifuge peut comprendre du duvet et/ou de la ouate synthétique.

Un tel garnissage est avantageux en ce qu'il est économique et possède d'excellentes propriétés d'isolation thermique.

Il est également envisagé que le garnissage calorifuge soit de la ouate synthétique dont la densité est supérieure ou égale à 130g/m², et de préférence égale à 200g/m² pour une épaisseur du garnissage de l'ordre de 3cm.

Dans ces conditions, la capacité de la housse à limiter la perte de chaleur de l'intérieur de la housse vers l'extérieur de cette housse est optimale. De plus, la housse forme une excellente protection contre d'éventuelles chutes.

Il est par ailleurs envisagé que:
- le rabat comporte un panneau dont un bord est raccordé à une des parois latérales du réceptacle, et dont les trois autres bords sont prolongés par trois parois latérales, et
- l'élastique s'étend parallèlement bords des parois latérales du rabat, depuis ces bords.

Dans ce cas, l'élastique permet de clore hermétiquement la housse lorsque le rabat est dans sa première position.

La hauteur des parois latérales du rabat peut être sensiblement égale à la hauteur des parois latérales du réceptacle.

Une telle conformation est avantageuse en ce que, lorsque la housse est dans sa première position fermée, les parois latérales du réceptacle et du rabat se superposent l'une sur l'autre. L'épaisseur du garnissage sur les parois latérales de la housse est alors doublée ce qui permet d'améliorer plus encore la protection contre d'éventuelles chutes de l'appareil.

Enfin, il est envisagé que:
- le réceptacle comporte quatre parois latérales, et
- les moyens de maintien de l'appareil dans le récéptacle comprennent un élastique formant une collerette s'étendant depuis les bords des parois latérales.

Dans ces conditions, l'introduction et le retrait de l'appareil dans le réceptacle est facilitée, tout en laissant accès à la face avant de l'appareil pour l'utilisation de celui-ci.

L'invention sera mieux comprise à la lecture de la description qui suit en référence aux dessins schématique annexé représentant, à titre d'exemple non limitatif une forme d'exécution de cette housse:
- la figure 1 en est une vue de face en position ouverte;
- la figure 2 en est une vue de côté en position ouverte;
- la figure 3 en est une vue de côté en position fermée; et
- la figure 4 en est vue de face logeant un appareil électronique.

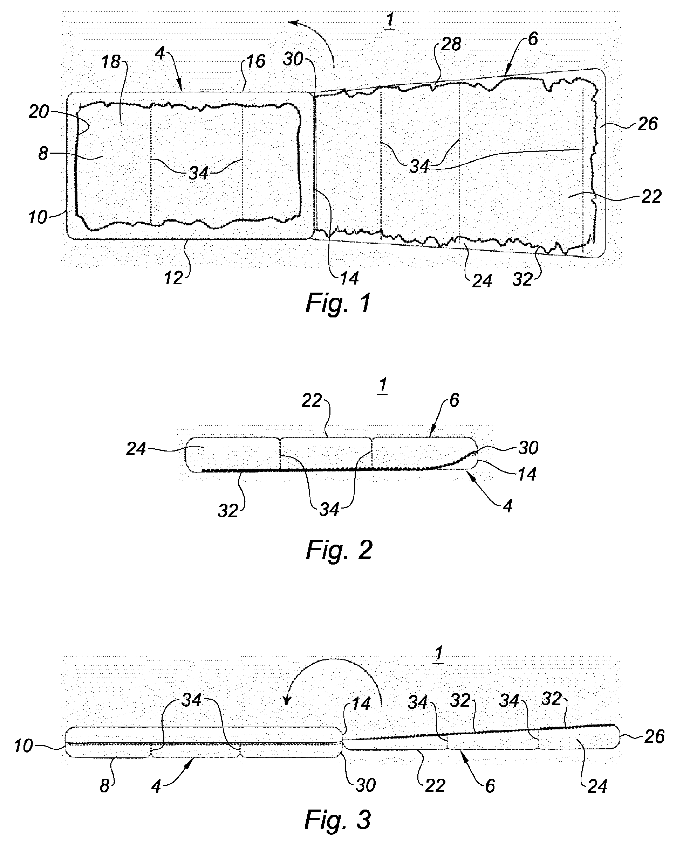

La figure 1 illustre une housse 1 pour un appareil électronique portable. La housse 1 est formé d'un réceptacle 4 et d'un rabat 6. Le réceptacle 4 et le rabat 6 sont mécaniquement raccordés l'un à l'autre par une liaison articulée.

Le récéptacle 4 est de forme sensiblement parallélipédique. Le récéptacle 4 est formé d'une paroi inférieure 8 et de paroi latérales. Ici, le récéptacle comprend quatre parois latérales, respectivement 10, 12, 14 et 16. Ces parois 10, 12, 14 et 16 s'étendent depuis des bords de la paroi 8, perpendiculairement à cette paroi 8. Les parois 10, 12, 14, et 16 délimittent une ouverture 18 par laquelle un appareil peut être introduit et retiré du réceptacle 4. Ici, l'ouverture 18 est sensiblement rectangulaire. La taille 18 de cette ouverture est avantageusement conformée de manière épouser le contour d'un écran de l'appareil destiné à être reçu dans le réceptacle.

Le réceptacle 4 comprend également des moyens de maintien de l'appareil dans ce récéptacle 4. Dans l'exemple, ces moyens de maintien comprennent un élastique 20 formant une collerette s'étendant depuis les bords supérieurs des parois latérales 10, 12, 14 et 16.

Le rabat 6 est déplaçable entre:
● une première position (illustrée sur la figure 2) dans laquelle le rabat 6 recouvre l'ouverture 18 du réceptacle 4, et
● une seconde position (illustrée sur la figure 3) dans laquelle le rabat 6 ne recouvre pas cette ouverture 18.

Le rabat 6 est formé d'un panneau 22 et de parois latérales 24, 26 et 28. Le panneau 22 est mécaniquement raccordé à la paroi latérale 14 du réceptacle 4. Dans l'exemple, le panneau 22 et la paroi latérale 14 sont raccordés par le biais d'une couture 30. Ici, la couture 30 s'étend selon une droite disposée à mi hauteur de la paroi latérale 14, parallèlement à la paroi inférieure 8.

Les parois latérales 24, 26 et 28 s'étendent depuis des bords du panneau 22, perpendiculairement à ce panneau 22. Avantageusement, la hauteur des parois latérales 24, 26 et 28 est sensiblement égale à la hauteur des parois latérales 10, 12, 14, et 16 du réceptacle 4.

Le rabat 6 comprend également un élastique 32 pour maintenir ce rabat 6 sur le réceptacle 4 lorsque le rabat 6 est dans sa première position. L'élastique 32 s'étend parallèlement aux bords des parois latérales 24, 26, et 28 du rabat 6, depuis ces bords 24, 26, et 28.

Dans ces conditions, lorsque le rabat 6 est dans sa première position, les parois latérales 24, 26, et 28 viennent en appui contre les parois latérales, respectivement, 12, 10, 16, et l'élastique 32 vient en appui contre la paroi inférieure 8 du récéptacle 4.

Les parois 10, 12, 14, 16, 24, 26 et 28 de la housse 1 sont réalisées à partir d'un matériau textile formant une enveloppe au sein de laquelle est logé un garnissage calorifuge. Ce garnissage calorifuge peut par exemple comprendre du duvet naturel ou de la ouate synthétique.

De préférence, la densité du matériau calorifuge au sein des parois est supérieure à 130 g/m², 150 g/m², 170 g/m² et de manière encore plus préférentielle supérieure à 190 g/m² pour une épaisseur du garnissage de l'ordre de 3cm

A titre d'exemple, le matériau textile utilisé dans le mode de réalisation illustré est un tissu anti-duvet. Ici, le garnissage est de la ouate synthétique de densité égale à 200 g/m².

Avantageusement, les parois comprennent des coutures 34 formant des coussins dans les parois de la housse 1. Ces coutures 34 permettent de répartir le garnissage de façon homogène dans les parois de la housse 1 lors de la fabrication. Ici, les coutures 34 s'étendent parallèlement à la couture 30.

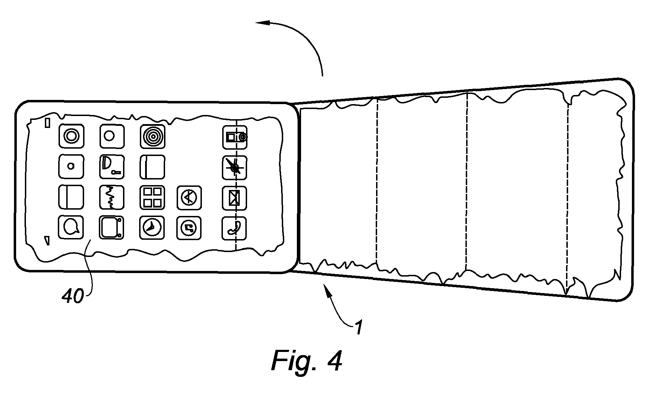

La figure 4 illustre la housse 1 à l'intérieur de laquelle est logé un appareil électronique portable 40. Dans l'exemple, l'appareil électronique 40 est un téléphone mobile de type smart phone.

De nombreux autres modes de réalisation sont possibles.

En variante, seules certaines parois possèdent une structure formée d'un matériau textile et d'un matériau calorifuge. Par exemple, seul le rabat est réalisé en tissu muni d'un garnissage, alors que le réceptacle est réalisé par exemple en un autre matériau tel qu'une coque en matière plastique.

## Revendications

1. Housse (1) pour un appareil électronique portable, comportant:
- un réceptable (4), destiné à recevoir l'appareil électronique, qui est formé :
● d'une paroi inférieure (8),
● d'au moins trois parois latérales (10, 12, 14, 16), délimitant une ouverture (18) par laquelle l'appareil peut être introduit et retiré du réceptacle (4), et
● de moyens de maintien de l'appareil dans le réceptacle,
- un rabat (6) mécaniquement raccordé à une des parois (14) du réceptacle (4), deplaçable entre:
● une première position dans laquelle le rabat (6) recouvre l'ouverture (18) du réceptacle (4), et
● une seconde position dans laquelle le rabat (6) ne recouvre pas cette ouverture (18),
**caractérisé en ce que**,
- le réceptacle (4) et la rabat (6) sont réalisés dans un matériau textile formant une enveloppe au sein de laquelle est logé un garnissage calorifuge, et
- le rabat (6) comporte un élastique (32) pour son maintien sur le réceptacle (4) lorsque le rabat (6) est dans sa première position.

2. Housse (1) selon la revendication 1, **caractérisé en ce que** le garnissage calorifuge comprend du duvet et/ou de la ouate synthétique.

3. Housse (1) selon la revendication 2, **caractérisé en ce que** le garnissage calorifuge est de la ouate synthétique dont la densité est supérieure ou égale à 130g/m², et de préférence égale à 200g/m² pour une épaisseur du garnissage de l'ordre de 3 cm.

4. Housse (1) selon l'une quelconque des revendications 1 à 3, **caractérisé en ce que**:
- le rabat (6) comporte un panneau (22) dont un bord est raccordé à une des parois latérales (14) du réceptacle, et dont les trois autres bords sont prolongés par trois parois latérales (26, 28, 28), et
- l'élastique (32) s'étend parallèlement aux bords des parois latérales (24, 26, 28) du rabat, depuis ces bords.

5. Housse (1) selon la revendication 4, **caractérisé en ce que** la hauteur des parois latérales du rabat est sensiblement égale à la hauteur des parois latérales du réceptacle.

6. Housse (1) selon l'une quelconque des revendications 1 à 5, **caractérisé en ce que**:
- le réceptacle (4) comporte quatre parois latérales (10, 12, 14, 16), et
- les moyens de maintien de l'appareil dans le récéptacle comprennent un élastique formant une collerette s'étendant depuis les bords des parois latérales.
